# EUROPEAN PATENT APPLICATION

(11) **EP 2 479 696 A1**
(43) Date of publication of application: **25.07.2012**
(21) Application number: 11250053.3
(22) Date of filing: 19.01.2011
(51) Int. Cl.: G06F 21/00

(54) **Data security**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A data storage and access system (1) includes an access control system (12) which allows protected data in a store (11) to be accessed only on provision of an access token (93), which has to be generated and retrieved from a secure remote server (3). This prevents unauthorised tampering with the data in the store (11). After each use, the store (11) is locked and the token is deleted, so that a new token has to be retrieved from the secure server (3) for each accession attempt.

## Description

This invention relates to the control of access to data stored on a user device such as a personal computer, personal data assistant (PDA) or the like. Such data may include identity details about the device, management account details to manage the device, credentials to allow access to telephony services, payment details for a person using said device to allow secured payments or transactions, or any other data which needs to be kept private to the user.

The invention has particular application in devices used for accessing broadcast services over a data link, which maintain data identifying the device so that a server providing a subscription service can determine whether the user requesting a service is authorised to receive it. A problem has arisen in some systems in which such devices perform a self check to determine whether the required identity is present in a secure data area. However, if an unauthorised user gains access to this area, it can be reprogrammed, either by replacing the data or simply generating a confirmation response purporting to confirm the presence of the authorisation data, irrespective of the actual data content. To prevent such abuses, it is desirable that the secure data cannot be accessed without co-operation from an external source which is under the control of the service provider.

Commonly, data is protected by means of an encryption key, (keycode or password) which needs to be input to the device by the user or retrieved from storage on the device in order to allow access to the protected data files. Conventionally, the keycode is compared with a copy stored on the device and access is granted if they match. However, keeping a copy of the key on the local device leaves it vulnerable to physical or logical attack through methods such as hardware hacking should the device be stolen, or hacked into. If a hacker can extract the key, he can use it to open up access to the data it protects. Once he has the key, he may also be able to perform similar attacks on other devices having the same key, allowing the installation of so-called "malware", i.e. software which causes a device to operate in a manner against the interests of its owner.

The present invention provides an alternative method of maintaining the key, preventing access to the secure data by unauthorised persons.

According to the invention there is provided a data storage and access system comprising a data store, the data store having an access control system which allows protected data in the store to be accessed only on provision of an access token, and an interface for receiving an access token from a secure remote server.

The invention also provides a method of storing and retrieving data in a data store, wherein an access control system allows protected data in the store to be accessed by a user only on provision of an access token received from a secure remote server.

In the preferred embodiment each successful data accession request permits access to the secure data for a limited duration or number of accessions, (typically a single accession), after which the access token is deleted from the data storage and access system, so that it is then necessary to interact with the secure remote server before another accession is possible. In the preferred embodiment, the access token is updated dynamically. The described embodiment uses a public/private key system wherein the a first key is generated by a quasi random process for activation by a complementary access token generated remotely by the secure remote server in response to an accession request from the data storage and access system, such that each data accession attempt requires a different access token to be obtained from the secure remote server. Thus, even if an access token were to be maliciously intercepted, it cannot subsequently be used to obtain data from the data storage and access system.

The data storage and access system preferably provides a token request processor for generating requests to the remote server for an access token in response to a request being made for access to the protected data. The token request processor preferably includes a processor for co-operating with the remote server to authenticate the identity of the requesting user. In the preferred arrangement, the authentication data is maintained by the secure remote server, not the access token request processor, to maintain the security of the protected data in the event that the security of the data storage system itself is compromised.

This invention allows the use of a key which is maintained on a secure server remote from the device itself, preventing unauthorised access to the data stored on the device even if an unauthorised person tampers with the security settings on the device itself. An authorised user or process can access the token from the remote secure server, using a password or other identity. The token in turn gives access to a secure area on the device. In the preferred arrangement the key is valid for one accession only, and is deleted from the device once it has been used.

The preferred arrangement uses a dynamic (transient and non-repeating) key, that is to say one that changes periodically, or with each use, according to a pseudo-random program resulting in a unique non-predictable code on each iteration.

An embodiment of the invention will be described with reference to the drawings, in which:
Figure 1 is a schematic depiction of a user device and remote secure server operating according to the invention;
Figure 2 is a sequence diagram illustrating the exchanges of data taking place during operation of the invention.

It will be appreciated that the various functional elements described and depicted herein may in practice be embodied as software applications operating on a general purpose computer.

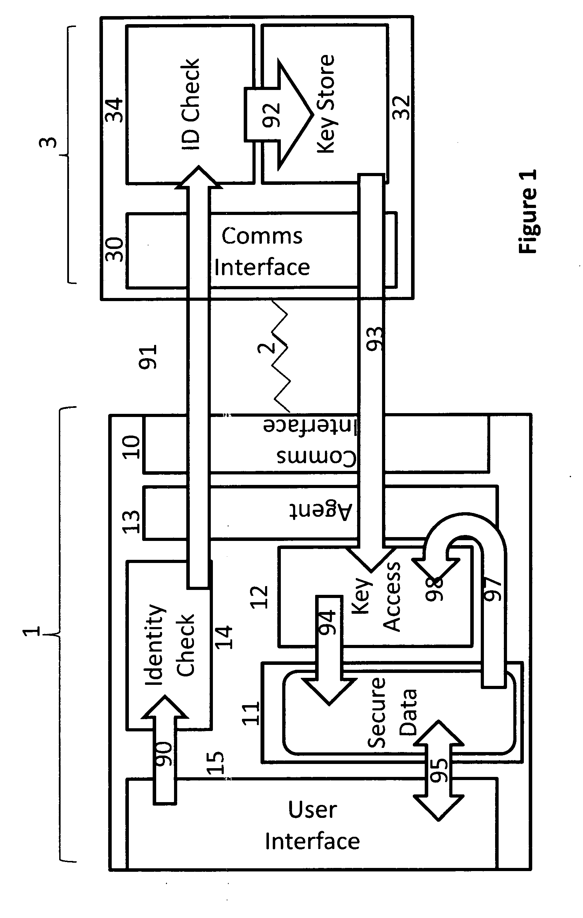

Figure 1 depicts a user device 1 such as a PDA and a network-based security platform 3. The user device 1 includes a communications interface 10 for establishing connection through a data communications network 2 such as the "Internet". Such communication may be by any suitable means such as Ethernet or wireless access. The device also includes a secure storage area 11, in which private data may be stored, such as administrator account details to manage the device, credentials to allow access to telephony services, account details for secured payments or transactions, or any other data which needs to be kept private. This data may be private to the user, or it may be data needed to run a service which needs to be kept private from the user to prevent tampering: for example to ensure that a subscription service accessible using the device has been paid for and the necessary access codes loaded on he device from the service provider.

The data in this storage area 11 is protected by an authorisation function 12, which allows access to the storage area only if an appropriate access code is provided. The authorisation function operates using a "public/private" key system, the "public" key being maintained by the user device. In the present context there is no particular need to publicise the key, but the conventional term is used here to distinguish it from the more heavily-protected "private" key to be discussed later.

The authorisation function 12 may operate dynamically, generating a new release code (public key) each time a new access request is made, according to a predetermined pseudo-random algorithm.

The user device 1 co-operates through an agent application 13 and the communications interface 10 with a secure key storage/generation application running on the security platform 3, and accessible through the communications network 2 using a secure protocol such as Transport Layer Security (TLS) or Secure Sockets Layer (SSL). The Agent 13 is the proxy to all the secured data 11 and is the only route into and out of that portion of the device, providing an API (application programming interface) or other programmatic interface to access it.

The user device also includes an identity-checking application 14 and a user interface 15. The identity-checking application 14 can use any suitable means for ensuring that the device is indeed the authorised one. Such means could include biometrics using the user interface, or a passcode memorised by the user as a "pre-shared secret", or an electronic certificate stored on the device and authenticated by a trusted third party. In this latter case the user interface 15 is not directly involved in the authentication process). The authorisation checks are not performed by the user device itself: the authentication data is instead forwarded over the secure communications link 2 to the secure key storage/generation application 3 for authentication.

The secure key storage/generation application 3 comprises a key generation function 32 and an authentication function 34. The authentication function 34 is responsive to access token requests received from the user device 1 to check that the user credentials are authentic and, if so, to cause the key generation function to generate the access token appropriate for accessing the secure data. As already discussed, this key does not have to be a fixed key, and is preferably a time-derived token which is different each time it is used, based on an algorithm known only to the key store 32. The key manager 12 in the user device runs a complementary algorithm to derive its keys, but the network-based key generation algorithm is not derivable from it and is thus secure from attack by unauthorised persons having access to the user device. A suitable example would be a key using the ITU-T X.509 standard. Other possible keys would include a certificate, serial number, or pre-shared key. The server-based key-generation function may provide keys for many different users, but each device should have its own unique keys.

It should be noted that the pseudo-random algorithm generating the "public" release codes is run on the user device, and could therefore be vulnerable to hacking, but the private access tokens are generated by the secure server, and the algorithm to generate them can be protected, making it difficult to replicate the codes. The codes are generated dynamically and pseudo-randomly, so each pair of codes is used only once, in response to a request from the authorised user. As each private code is valid for only one access attempt, anyone intercepting such a "private" code would find it of no use were they to subsequently attempt to use it to access the data in the device.

Once the data access process has operated successfully, the data may remain accessible for the rest of the user session, until restart or reset. However, this may leave all the data in the secure data store 11 (not just that for which the user opened the store) open to unauthorised access using hardware hacks. It is therefore preferred that the protected data remains inaccessible except when it is actually being used, and so the access process is executed every time the device needs access to any of the confidential data. This requires a separate access request to be made to the key store 3 requested every time data is required, even during a single session, allowing the data store 11 to remain locked except for all but very short intervals.

If more than one user is permitted to use the device, different keys may be provided for Read-only or full Read/Write access. Read-only access may be appropriate where the operating data may otherwise be vulnerable to surreptitious modification e.g. by malware. The Agent 12 can advise the Key Store 32 that it needs read access only. If that is the case the key store can provide a key which will not allow the Agent to write to the secure area.

To further protect the data in the secure area 11, it may be arranged to be locked, reset or destroyed (overwritten) in the event of an access attempt using an invalid key.

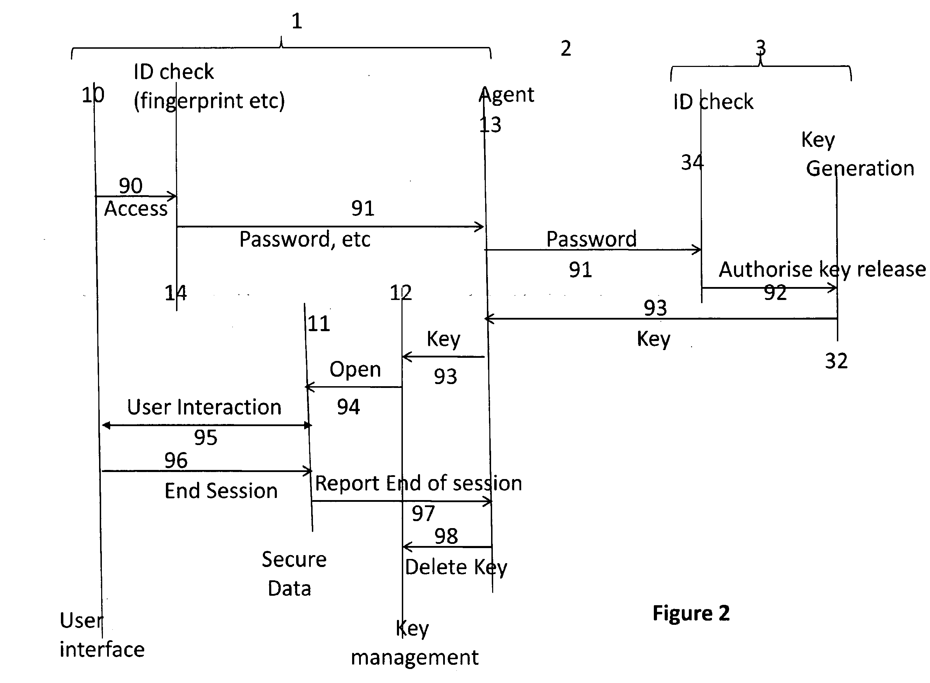

The operation of the invention will now be described in more detail, with reference to the sequence diagram in Figure 2.

The process is initiated by an access attempt 90. This may be made by a user, through the user interface 10, or it may be generated by the device itself in response to some other external input. The authentication processor 14 goes through a process to authenticate the interaction. For example, the user may be required to provide one or more of biometric identity data, a remembered password, a certificate, code, serial number, a pre-shared key, or a time-based identity. The authentication processor 14 on the user device does not hold the necessary verification data itself, but merely relays the interactions 91, through a secure communications link 2, between the agent 13 and a secure identity check server 34 forming part of the key storage function 3, using a protocol such as Transport Layer Security (TLS) or Secure Sockets Layer (SSL) protocols.

If the authentication credentials are validated, the identity checking function 34 authorises (92) the release of an access token (93) from the key generation function 32. The communications connection 2 can then be closed down, so that the identity check process (90, 91, 92) has to be repeated for further accession attempts.

The access token 93 generated by the access token generation function 32 is preferably one half of a single-use public/private key generated by a pseudo-random algorithm. The key is transmitted over the network 2 to the user terminal 1, where it is passed from the agent 13 to the key management function 12. The key is then convolved with the complementary key generated locally and, if they match, the user is given access to the data in the store 11 (step 94), allowing the data to be accessed (step 95) and, if required and permitted, to modify it.

The data store 11 may be closed at the end of the user session (step 96), and then closed (step 96) but for added security the store may only be open for a duration limited either by time or by the number of accessions permitted - preferably each key release allows a single accession, or a single read/write interaction. When access to the store 11 is closed, the agent 13 (step 97) generates an instruction to the key management system 12 to delete the key and reset the security provisions (step 98). Thus, even if the transmission 93 of the key over the network 2 from the key generation function 32 to the key management function 32 were to have been intercepted, the intercepted key will not be valid for any subsequent attempts to access data from the store 11.

## Claims

1. A data storage and access system comprising a data store, the data store having an access control system which allows protected data in the store to be accessed only on provision of an access token, and an interface for receiving an access token from a secure remote server.

2. A data storage and access system according to claim 1, wherein the interface is arranged to close connection with the secure remote server after receipt of each access token

3. A data storage and access system according to claim 1 or claim 2, comprising means for deleting the access token from the data storage and access system after a predetermined duration or number of accessions, such that a further interaction with the secure remote server is required to enable further accessions of the protected data to be made by the user.

4. A data storage and access system according to claim 1, claim 2 or claim 3, comprising a access token request processor for generating requests to the remote server for an access token in response to a requirement for access to the protected data.

5. A data storage and access system according to claim 4, wherein the access control system comprises a public/private key system wherein the a first key is generated by a quasi random process for activation by a complementary access token generated remotely by the secure remote server, such that each data accession attempt requires a different access token to be obtained from the secure remote server.

6. A data storage and access system according to claim 4 or claim 5 wherein the access token request processor comprises an authentication processor for co-operating with the remote server to authenticate the request prior to obtaining an access token.

7. A data storage and access system according to any preceding claim, in combination with a remote server communicating therewith over a communications connection, the remote server comprising an authentication processor for receiving identification data in association with an accession request from the data storage and access system, and for validating such identification data, and a key generator for generating a complementary access token in response to a validated accession request from the data storage and access system.

8. The combination of claim 7, wherein authentication data is maintained by the secure remote server for comparison with data received from the data storage and access system.

9. A method of storing and retrieving data in a data store, wherein an access control system allows protected data in the store to be accessed by a user only on provision of an access token received from a secure remote server.

10. A method according to claim 9, wherein a communications connection between the access control system and the secure remote server is opened for transmission of an access token, and wherein receipt of the token causes the communications connection to be closed down.

11. A method according to claim 9 or claim 10, wherein the access token is deleted from the data storage and access system after a predetermined duration or number of accessions, such that a further interaction with the secure remote server is required to enable further accessions of the protected data to be made by the user.

12. A method according to claim 11, claim 12, or claim 13, wherein access token requests are transmitted to the remote server from the data storage and access system in response to a request being made by a user for access to the protected data.

13. A method according to claim 12, wherein the access control system comprises a public/private key system wherein the a first key is generated by a quasi random process for activation by a complementary access token generated remotely by the secure remote server, such that each data accession attempt requires a different access token to be obtained from the secure remote server.

14. A method according to claim 12 or claim 13 wherein the access token request processor co-operates with the remote server to authenticate the identity of the requesting user prior to obtaining an access token.

15. A method according to claim 14, wherein authentication data is maintained by the secure remote server for comparison with data received from the data storage and access system.
